# EUROPÄISCHE PATENTSCHRIFT

(11) **EP 3 328 916 B1**
(45) Veröffentlichungstag und Bekanntmachung des Hinweises auf die Patenterteilung: **20.11.2019**
(21) Anmeldenummer: 16750422.4
(22) Anmeldetag: 01.08.2016
(51) Int. Cl.: C08G 69/16, C08G 69/42

(54) **FLAMMFESTES POLYAMID ALS REAKTIONSPRODUKT EINES LACTAMS, EIN VERFAHREN ZU DESSEN HERSTELLUNG SOWIE DESSEN VERWENDUNG**
FLAME-RESISTANT POLYAMIDE AS REACTION PRODUCT OF A LACTAM, AND METHOD FOR THE PRODUCTION AND USE THEREOF
POLYAMIDE RÉSISTANT AU FEU COMME PRODUIT DE RÉACTION D'UN LACTAME, PROCÉDÉ DE SA FABRICATION ET SON UTILISATION

(30) Priorität: 31.07.2015 DE 102015112592
(43) Veröffentlichungstag der Anmeldung: 06.06.2018
(73) Patentinhaber: Deutsche Institute für Textil- und Faserforschung Denkendorf, 73770 Denkendorf (DE)
(72) Erfinder: ABEL, Thomas, 73066 Uhingen (DE); MÜLLER, Alexander, 73730 Esslingen (DE); UNOLD, Jörg, 71686 Remseck am Neckar (DE)
(74) Vertreter: Held, Stephan
(86) Internationale Anmeldenummer: PCT/EP2016/068302
(87) Internationale Veröffentlichungsnummer: WO 2017/021355

(56) Entgegenhaltungen:
- CN-A- 102 675 630
- CN-A- 103 694 468
- CN-A- 104 448 299
- DE-A1-102009 005 967

## Beschreibung

Die Erfindung betrifft ein flammfestes Polyamid als Reaktionsprodukt eines Lactams, insbesondere von ε-Caprolactam und/oder Laurinlactam, und gegebenenfalls mit einem Gehalt an weiteren Komponenten, ein Verfahren zu dessen Herstellung sowie dessen Verwendung zur Herstellung von Formkörpern.

Unter den handelsüblichen Polyamiden sind die Polyamide PA6 und PA6.6 von besonderer Bedeutung. Deren weltweiter Verbrauch betrug im Jahre 2011 etwa 6,7 Mio. t (Quelle: PCI Yellow Book 2012). Die größten Abnehmer dieser Polyamide waren die Hersteller von Fasern und Filamenten (53%). Etwa 41% wurden zu technischen Compounds und etwa 6% zu Folien verarbeitet. Die wirtschaftliche Bedeutung dieser Polyamide nimmt nicht zuletzt auch vor dem Hintergrund zunehmender Bioverfügbarkeit der Ausgangsverbindungen stetig zu. Polyamid 6 gehört hierzu und wird großtechnisch durch ringöffnende Polymerisation von ε-Caprolactam hergestellt, was sich durch die folgende Reaktionsgleichung darstellen lässt:

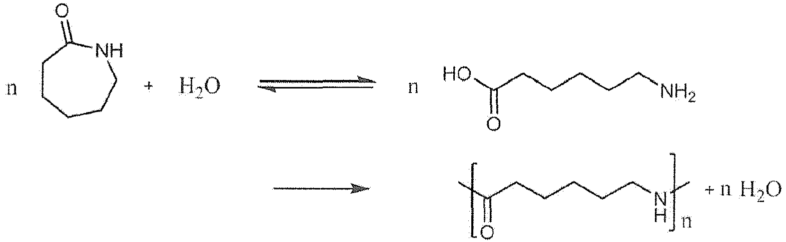

Nach der Ketteninitiierung folgt die Kettenverlängerung im Rahmen einer Polykondensation. Hierbei entspricht die Verwendung von Monocarbonsäuren und Dicarbonsäuren als Kettenregler zur Einstellung des prozessbedingten Molekulargewichts bzw. einer engeren Molekulargewichtsverteilung dem Stand der Technik. Dabei führen die als Kettenregler eingesetzten Mono- und Dicarbonsäuren durch Amidbildung ("*Maskierung*" eines reaktiven Kettenendes) zum Ende des Stufenwachstums, wobei die mittlere Kettenlänge durch die Menge des jeweils zugesetzten Kettenreglers bestimmt wird.

Weiterhin ist es Stand der Technik, Polyamiden durch nachträgliches Ausrüsten, z.B. mit Flammschutzadditiven, zusätzliche Funktionen zu verleihen, d.h. durch einen Veredelungsprozess. Die Flammschutzkomponenten werden dabei in der Regel in die Polymermatrix eingebettet oder kovalent an die Polymerkette gebunden. Grundsätzlich wird zwischen nichtreaktiven und reaktiven Flammschutzmitteln unterschieden. Reaktive Flammschutzmittel werden bereits vor oder während der Polymerisation oder Polykondensation zugegeben.

Das nachträgliche Ausrüsten von Polyamiden mit Flammschutzmitteln hat den sehr großen Nachteil, dass diese abhängig von der Struktur und von der Art des Einbringens in die Fasermatrix unterschiedlich schnell wieder ausgetragen werden können. Das zu rasche Austragen der Flammschutzausrüstung durch z.B. wiederholtes Waschen oder chemisches/mechanisches Reinigen führt im Grenzfall zum vollständigen Verlust der Nichtentflammbarkeit. Dieser Nachteil wird dann umgangen, wenn die Flammschutzkomponente chemisch an die Fasermatrix angebunden bzw. in das Faserpolymer eingebunden ist (kovalente Verbindung), so dass ein Austrag nicht mehr möglich ist.

Ein weiterer Nachteil des Stands der Technik ist es, dass zum nachträglichen Ausrüsten von Fasern und Flächen aus Fasern zusätzliche Prozessschritte erforderlich sind. Das Ausrüsten von Textilien mit Flammschutzmitteln erfolgt in der Regel in der Veredlung und ggf. im Anschluss an die Färberei. Zur Veredlung werden Flammschutzmittelenthaltene Flotten eingesetzt. Die auszurüstenden Flächen werden über ein Tauchbad benetzt und anschließend durch Quetschwalzen vorgetrocknet. Danach erfolgt der eigentliche Trocknungsschritt. Die auf diese Weise erfolgte Imprägnierung wird thermisch/chemisch fixiert. Die Veredlung erfordert zudem nicht unerhebliche Mengen Lösungsmittel (meist Wasser). In der kunststoffverarbeitenden Industrie werden Additive (z.B. Flammschutzmittel) zum Basispolymer compoundiert, was einen weiteren technischen Produktionsschritt darstellt. Partikuläre Additive haben zudem einen starken Einfluss auf die Eigenschaften des Basispolymers.

Eine Alternative zur nachträglichen Ausrüstung besteht darin, bereits in der Synthese und/oder im anschließenden Verarbeitungsschritt (z.B. Schmelzextrusion) Flammschutzadditive in den Prozess zu integrieren. Bei der reinen Additivierung erfolgt kein chemisches Anbinden an das (Faser-)Polymer, sondern lediglich eine statistisch bessere Verteilung.

Prinzipiell erweisen sich höhermolekulare funktionelle Zusätze als langlebiger, da das Austragen hierbei in der Regel deutlich langsamer stattfindet. Unter Abbaubedingungen wird der Prozess dann allerdings wieder beschleunigt. Zudem führen höhermolekulare Zusätze zu einem veränderten Kristallisationsverhalten und insbesondere im Faserbereich oft zum Verlust wichtiger mechanischer Eigenschaften. Die eher blockweise Verteilung bei z.B. längerkettigen Flammschutzadditiven kann sich zudem negativ auf das Brandverhalten auswirken (Inhomogenität).

Die obigen Ausführungen gelten uneingeschränkt für ein flammfestes Polyamid als Reaktionsprodukt eines Lactams, insbesondere des ε-Caprolactams und Laurinlactams, wenngleich in Zusammenhang mit der Herstellung flammfester Polyamide als Kondensationsprodukt von Dicarbonsäure mit Diaminen bereits Vorschläge im Stand der Technik gemacht worden sind, wobei flammhemmende Phosphorverbindungen während der Herstellung in die jeweilige chemische Reaktion einbezogen werden. Hierzu sei verwiesen auf WO 2014/154805 A1 sowie WO 2015/007783 A1. In beiden Fällen enthält das flammfeste Polyamid PA 6.6 in seiner Hauptkette neben den Amid-Struktureinheiten Phosphor-modifizierte Struktureinheiten, so z.B. Phosphinsäureamid-Struktureinheiten.

Hinzuweisen ist noch auf folgenden Stand der Technik: In der DE 10 2009 005 967 A1, CN 102 675 630 A, CN 103 694 468 A und CN 104 448 299 A werden flammfeste Polyamide beschrieben. Jedoch offenbart keines der zitierten Dokumente die von der nachfolgend beschriebenen Erfindung geforderte intrinsische Viskosität. Der Stand der Technik nach der CN 102 675 630 A kommt der Erfindung am nächsten. Diese betrifft die Darstellung von flammfesten Polyamiden, welche zu Fasern weiterverarbeitet werden können (sh. [0004]). Auch wird in diesem Dokument die Verwendung von Spinnprozessen offenbart, so dass davon auszugehen ist, dass es sich hierbei um Schmelzspinnprozesse handelt. Es konnte durch Nachstellung im Rahmen von Vergleichsversuchen gefunden werden, dass die in der CN 102 675 630 A beschriebenen Polyamide eine Viskosität aufweisen, die nicht der Forderung der nachfolgend beschriebenen Erfindung entspricht. Die ermittelte Viskosität impliziert gemäß der Mark-Houwink-Beziehung, dass sich die zu vergleichenden Molmassen unterscheiden.

Der Erfindung lag die Aufgabe zugrunde, ein flammfestes Polyamid vorzuschlagen, das einfach herzustellen ist, insgesamt besonders gute Eigenschaften aufweist, insbesondere die wünschenswerte Flammfestigkeit zeigt, und darüber hinaus die geeignete Licht- und Wärmebeständigkeit besitzt, um es technisch gut verarbeiten zu können.

Erfindungsgemäß wird diese Aufgabe durch ein flammfestes Polyamid als Reaktionsprodukt eines Lactams, insbesondere von ε-Caprolactam und/oder Laurinlactam, und gegebenenfalls mit einem Gehalt an weiteren Komponenten dadurch gelöst, dass es ein flammfestes Polyamid FR enthält, das in seiner Hauptkette neben den Polyamid-Struktureinheiten der Formel (I)

-NR¹-(CHR"₁)n-CO- (I),

worin die Polyamid-Struktureinheiten auch auf zwei oder mehrere unterschiedliche Lactame zurückgehen können und worin bedeuten
n eine ganze Zahl, insbesondere eine ganze Zahl von 2 bis 19, insbesondere von 3 bis 12, besonders bevorzugt von 5 bis 10,
R"₁ Wasserstoff, einen organischen linearen oder verzweigten C₁-C₁₀-Rest, vorzugsweise einen C₁-C₁₀-Alkylrest, insbesondere einen Methyl-, Ethyl-, i-Propyl-, n-Butyl-, i-Butyl-, tert.-Butyl-, einen Phenyl-, Acetyl- und/oder Silylrest, insbesondere Trimethylsilyl-, Tributylsilyl- oder Triphenylsilylrest,
die folgenden phosphormodifizierten Struktureinheiten aufweist:
phosphormodifizierte Struktureinheiten der Formeln (IIIa1) und (IIIa2) 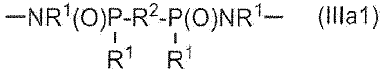 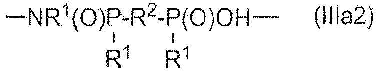 und/oder
phosphormodifizierte Struktureinheiten der Formeln (IIIb1) und (IIIb2) 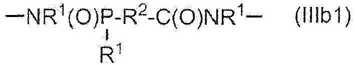 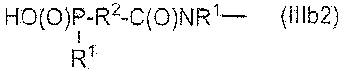 und optional
phosphormodifizierte Struktureinheiten der Formeln (IIIa3), (IIIb3) und/oder (IIIb4) 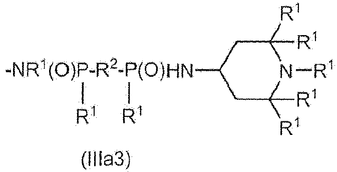 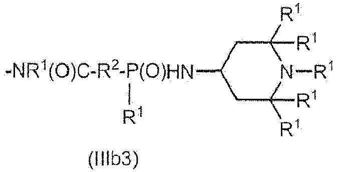 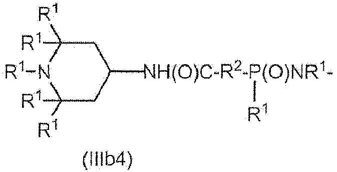
wobei in der Formel (IIIa1) und in den folgenden Formeln sowie in Formel (I) bedeuten:
   R¹, unabhängig voneinander, Wasserstoff, eine lineare, cyclische oder verzweigte C₁-C₆-Alkylgruppe, insbesondere eine C₁-C₃-Alkylgruppe, eine Arylgruppe, insbesondere mit bis zu drei kondensierten oder nicht kondensierten Ringen, insbesondere in Form einer Phenyl-, Benzyl-, Naphthyl-, Phenantryl-, Mesityl- und/oder Tolylgruppe, eine Alkylarylgruppe, insbesondere eine Triphenylmethylgruppe, und/oder eine Arylalkylgruppe, insbesondere eine i-Propylphenyl, tert.-Butyl-phenyl- und/oder Nonylphenylgruppe und/oder eine Alkyl- und/oder Arylsilylgruppe, insbesondere einen Trimethylsilyl-, Tributylsilyl- und/oder Triphenylsilylrest (Definition (II)),
   R² einen zweiwertigen organischen Rest, insbesondere in Form eines linearen, cyclischen oder verzweigten C₁-C₁₀-Alkylen-, insbesondere C₁-C₄-Alkylen-Restes, eines C₁-C₁₀-Alkenylen-, insbesondere eines C₁-C₆-Alkenylen-Restes und/oder eines C₆-C₁₀-Arylen-, insbesondere eines 1,4-Phenylen-Restes,
   wobei die einzelnen Reste in den jeweiligen Phosphinsäureamid-Struktureinheiten innerhalb der Hauptkette unterschiedlich sein können,
   und das flammfeste Polyamid FR eine relative Viskosität, gemessen nach DIN 51562 als 1%-ige Lösung in 96%-iger Schwefelsäure bei 25°C, von mindestens 1,7, insbesondere mindestens 1,9 aufweist.

In Einzelfällen ist es von Vorteil, wenn der Rest R¹ gemäß der obigen Definition (I) durch den Rest gemäß der Definition (II) ersetzt ist.

Zu der Verteilung der phosphorhaltigen Struktureinheiten innerhalb der Hauptkette des Polyamids:
Die phosphorhaltigen Struktureinheiten (IIIa1/IIIa2) und (IIIb1/IIIb2) sind über die Polymerkette verteilt, wobei ein erhöhter Anteil an endständigen Struktureinheiten der Formel (IIIa2) und (IIIb2) auftritt.
Bevor im Einzelnen auf die besonders vorteilhaften Ausgestaltungen der Erfindung eingegangen wird, erscheint es zweckmäßig, vorab den Kern der Erfindung darzustellen: Die Erfindung betrifft flammgeschützte Polymere bzw. deren Synthese, im vorliegenden Fall insbesondere die Herstellung von flammgeschütztem Polyamid 6 und Polyamid 12, durch Einsatz spezieller phosphorhaltiger Dicarbonsäuren bzw. Organophosphinsäuren, die im Herstellungsprozess neben der eigentlichen Flammschutzfunktion zusätzlich die Funktion des Kettenreglers übernehmen, sowie deren vorteilhafte Verwendung zur Herstellung von Filamentgarnen und von textilen Flächengebilden, insbesondere von Gewebe, Gestricken, Vliesen und Gewirken, zu denen der Nachweis eines besonderen Flammschutzeffekts im horizontalen Brandtest erbracht wird.

Eine vorteilhafte Weiterbildung des erfindungsgemäßen flammfesten Polyamids besteht darin, dass das flammfeste Polyamid FR eine relative Viskosität von mindestens 2,0 und/oder höchstens 4, insbesondere höchstens 3, aufweist.

Die Erfindung lässt sich des Weiteren auch dadurch vorteilhaft weiterbilden, indem die oben abstrakt formulierten Reste konkretisiert werden:
Die Zahl n im Zusammenhang mit der Formel (I) steht in einer Korrelation zu dem jeweils herangezogenen Lactam bzw. den eingesetzten Lactamen. n kann demnach eine ganze Zahl von 2 bis 19, insbesondere von 3 bis 15 sein, besonders bevorzugt 3 bis 12 sein. Dabei wird eine Zahl n von 5 bis 13, insbesondere 5 bis 10, ebenfalls besonders bevorzugt. Im Rahmen der Erfindung eignen sich demzufolge ganz besonders die nachfolgend aufgelisteten Lactame: 2,5-Diketopiperazin, 2-Piperidon, 2-Pyrrolidinon, Caprolactam, Önantholactam, Dodecanolactam, β-Propiolactam, Capryllactam, Lauryllactam und Laurinlactam. Auch substituierte Lactame wie γ-Methylcaprolactam, γ-n-Propylcaprolactam, γ-tert.-Butylcaprolactam, ε-Methylcaprolactam, ε-Ethylcaprolactam, α,α-Dimethyl-β-propiolactam, Benzyllactam, N-Acyllactame, und/oder Silyl- und Phosphoryl-substituierte Lactame. In jedem Fall kommen auch Mischungen der bezeichneten Lactame erfindungsgemäß als Ausgangsmaterialien in Betracht. Ebenso können Lactame, die mit einem Brückenglied miteinander verbunden sind, eingesetzt werden, wie insbesondere Methylen-bis-Caprolactam. Bevorzugt sind aber Caprolactam, Lauryllactam und deren Mischungen. Die Herstellung der Lactame sowie deren Eigenschaften sowie deren Polymerisation sind in der Encyclopedia of Polymer Science and Technologie, Band 10 beschrieben.

Entsprechend der obigen Aufzählung können substituierte und unsubstituierte Lactame eingesetzt werden. Im Falle der substituierten Lactame, insbesondere zu der Formel (I), erweisen sich die folgenden Substituenten als besonders vorteilhaft:
So ist es vorteilhaft, dass der Rest R¹ in den Formeln (IIIa1)/(IIIa2) und (IIIb1)/(IIIb2) eine C₁-C₃-Alkylgruppe, insbesondere in Form einer Methyl-, Ethyl- und/oder 2-Propylgruppe darstellen.

Das flammfeste Polyamid gemäß der Erfindung lässt sich auch im Hinblick auf quantitative Gesichtspunkte vorteilhaft weiterbilden. So ist es zweckmäßig, dass das flammfeste Polyamid FR mindestens 0,01 Gew.-% und/oder höchstens 10 Gew.-%, insbesondere mindestens 0,01 und/oder höchstens 8 Gew.-% Phosphor enthält. Hierbei ist es besonders bevorzugt, wenn das flammfeste Polyamid FR 0,01 bis 4 Gew.-%, insbesondere 0,01 bis 2 Gew.-% Phosphor enthält.
Je nach Anwendungsfall ist es vorteilhaft, dem erfindungsgemäßen flammfesten Polyamid, sei es allein oder auch in Vermischung mit einem nicht erfindungsgemäßen Polyamid, eigenschaftsverbessernde Additive zuzugeben. Besonders für Anwendungen, in denen das Polyamid hohen Temperaturen für einen längeren Zeitraum ausgesetzt wird, z.B. in Spinnextrudern, werden zweckmäßigerweise Stabilisatoren herangezogen. Verwendung finden insbesondere UV-Stabilisatoren, Thermo-Stabilisatoren, Mattierungsmittel, Lichtstabilisatoren und/oder Nukleierungsmittel. Bei den Thermo-Stabilisatoren werden bevorzugt sterisch gehinderte Phenole, aromatische Amine, Phosphorigsäureester sowie Metallverbindungen (Kupfer(I)-, Mangan- und Nickelsalze eingesetzt. Zur Thermostabilisierung werden insbesondere Benzotriazolderivate oder substituierte Benzoesäurephenylester verwendet. Bevorzugte Lichtstabilisatoren sind Benzophenone, Benztriazole, Oxalaniide und/oder sterisch gehinderte Amine. Als Matterierungsmittel hat sich im Sinne der Erfindung als besonders vorteilhaft Titandioxid erwiesen. Die Mengenanteile der eigenschaftsverbessernden Additive, die dem erfindungsgemäßen flammfesten Polyamid einverleibt werden, sind nicht kritisch. Es hat sich gezeigt, dass ein Gehalt von 0,01 bis 5,0 Gew.-%, insbesondere von 0,3 bis 2,0 Gew.-% Additive, von Vorteil ist. Als vorteilhaft sind noch die Bereiche von 0,01 bis 1,0 Gew.-%, insbesondere 0,3 bis 0,7 Gew.-% Additive, zu bezeichnen.

Aus Obigem ergibt sich, dass sich ein vorteilhaftes flammfestes Polyamid dadurch auszeichnet, dass das flammfeste Polyamid eigenschaftsverbessernde Additive, insbesondere UV- und/oder Thermostabilisatoren und/oder Mattierungsmittel, enthält. Dabei ist es bevorzugt, dass sich die Thermostabilität durch den Einbezug von Aminopiperidin und/oder von substituierten Aminopiperidinen erhöht. Eine Weiterbildung des Gedankens des Einbezugs von Additiven besteht darin, dass sich die Thermostabilität durch Einbezug von 0,01 bis 1,0 Gew.-% Licht- und Wärmestabilisatoren der nachfolgend dargestellten Formel (VII) erhöht.

Die Erfindung zeichnet sich dadurch aus, dass sie eine Nichtentflammbarkeit aufweist, die den Vorgaben der Vorschrift UL 94 V-0 entspricht. Hierbei handelt es sich um eine der gängigsten Vorschriften zur Beurteilung der Brennbarkeit, die in den Underwriters Laboratories in der Vorschrift UL 94 beschrieben wird, welche mit gleichem Inhalt in die Normen IEC/DIN EN 60695-11-10 und -20 und die kanadische CSA C 22.2 eingeflossen ist. Darin wird die Qualität der Schwerentflammbarkeit mit einer Bunsenbrennerflamme getestet und in verschiedenen Stufen wie folgt klassifiziert: HB: langsames Brennen einer horizontal eingespannten Probe (mit Selbstverlöschen); V-2: Verlöschen einer vertikal eingespannten Probe innerhalb von 30 Sekunden; V-1: Verlöschen einer vertikal eingespannten Probe innerhalb von 30 Sekunden ohne brennendes Abtropfen von Kunststoffschmelze und V-0: Verlöschen einer vertikal eingespannten Probe innerhalb von 10 Sekunden.

Ein besonderer Vorteil des erfindungsgemäßen flammfesten Polyamids ist darin zu sehen, dass es eine für die Weiterverarbeitung besonders günstige relative Viskosität aufweist, die weitgehend auf das erfindungsgemäße Verfahren, nachfolgend noch geschildert, zurückgeht. Daher ist es vorteilhaft, dass das flammfeste Polyamid, insbesondere das flammfeste Polyamid FR als solches, eine relative Viskosität, gemessen nach DIN 51562, von mindestens 2,0 oder mindestens 2,2, insbesondere mindestens 2,4, und/oder höchstens 4, insbesondere höchstens 3 erreicht, insbesondere zur Weiterverarbeitung nach dem Schmelzspinnverfahren.

Bei der praktischen Verwertung der Erfindung hat es sich als besonders vorteilhaft erwiesen, wenn das flammfeste Polyamid FR mit nicht erfindungsgemäßen Polyamiden gemischt wird. Hierbei ist es zweckmäßig, dass das flammfeste Polyamid FR insbesondere als Gemisch mit nicht erfindungsgemäßen Polyamiden, in Form von Polyamid 6, Polyamid PA6.9 (Hexamethylendiamin/Acelainsäure), PA6.12 (Hexylmethylendiamin/Dodecansäure), PA4.6 (Tetramethylendiamin/Adipinsäure), PA12.12 (Dodecandiamin/Dodecandisäure) oder PA6.6 (Hexamethylendiamin/Adipinsäure) sowie PA6 (Polycaprolactam), vorliegt, wobei der Anteil des flammfesten Polyamids FR, bezogen auf das Gemisch, vorzugsweise mindestens 0,01 und/oder höchstens 20 oder höchstens 10 Gew.-%, insbesondere mindestens 0,01 und/oder höchstens 8 Gew.-%, beträgt. Hiermit sind dann besondere Vorteile verbunden, wenn das Gemisch des flammfesten Polyamids FR mit nicht erfindungsgemäßen Polyamiden 0,05 bis 6 Gew.-%, insbesondere 0,1 bis 1,5 Gew.-% Phosphor enthält.
Auch im Zusammenhang mit einem Gemisch aus erfindungsgemäßem Polyamid und nicht erfindungsgemäßen Polyamiden, wie oben dargestellt, sind dann besondere Vorteile verbunden, wenn das Gemisch aus flammfestem Polyamid FR und nicht erfindungsgemäßem Polyamid eine relative Viskosität, gemessen nach DIN 51562, von mindestens 1,7, insbesondere von mindestens 2,0 und/oder höchstens 4, insbesondere höchstens 3, erreicht, insbesondere zur Weiterverarbeitung nach dem Schmelzspinnverfahren. Eine besondere Weiterbildung dieses technischen Gedankens besteht darin, dass das Gemisch eine relative Viskosität von mindestens 2,0, insbesondere mindestens 2,2 und vorzugsweise mindestens 2,4 und/oder höchstens 4, insbesondere höchstens 3 erreicht.

Gegenstand der vorliegenden Erfindung ist auch ein Verfahren zur Herstellung eines flammfesten Polyamids, insbesondere des vorstehend beschriebenen erfindungsgemäßen flammfesten Polyamids, das dadurch gekennzeichnet ist, dass im Verlaufe einer Polyamidsynthese ein Lactam mit bevorzugt 4 bis 20 Ringatomen, insbesondere ε-Caprolactam und/oder Laurinlactam, wobei in den substituierten Lactamen die jeweiligen Substituenten denjenigen nach vorstehender Formel (I) entsprechen, mit einer oder mehreren Phosphor-haltigen Di(carbon)säuren der nachfolgenden Formeln (V) und/oder (VI), gegebenenfalls mit einem Lichtstabilisator der nachfolgenden Formel (VII),
in Form der Diphosphinsäure der Formel (V) 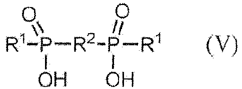 und in Form der Carbon-Phosphinsäure der Formel (VI) 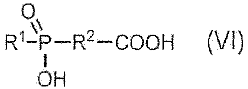 und optional in Gegenwart von Aminopiperidin und/oder substituierten Aminopiperidinen der Formel (VII) 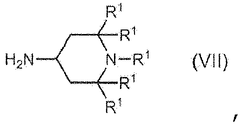 wobei in den obigen Formeln (V), (VI) und (VII) die Reste R¹ und R² die vorstehend und in den folgenden Ansprüchen dargestellte Bedeutung haben, unter einem Druck von mindestens 3 bar, insbesondere mindestens 10 bar, vorzugsweise von 4 bis 8 bar, wobei der Bereich von 15 bis 25 bar ebenfalls vorteilhaft ist, und bei erhöhter Temperatur, vorzugsweise von 230 bis 280°C, insbesondere zwischen 255 und 280°C und besonders bevorzugt zwischen 260 und 270°C, in Gegenwart von Wasser, insbesondere in einer Menge von höchstens 25 Gew.-% und/oder mindestens 2 Gew.-%, insbesondere mindestens 10 Gew.-%, bezogen auf die Reaktionsmischung, um den vorbezeichneten Druckrahmen im Reaktionsreaktor aufzubauen, polykondensiert werden, wobei aus dem im Reaktionsreaktor als Schmelze vorliegenden Polykondensationsprodukt Wasser entfernt wird, indem zum Abschluss dieser Maßnahme der Druck im Reaktionsreaktor auf weniger als 250 mbar, insbesondere weniger als 150 mbar, gesenkt und dann das flammfeste Polyamid FR gewonnen wird.

Bei dem erfindungsgemäßen Verfahren werden demzufolge ein oder mehrere Phosphor-haltige Di(carbon)säuren der bezeichneten Formeln (V) und (VI) bei optionaler Zugabe vom Licht- und Wärmestabilisator (VII) polykondensiert. Dabei werden die angesprochenen Reaktionsparameter eingehalten, so der bezeichnete Temperatur- und Druckrahmen sowie der Einbezug von Wasser.

Während der Reaktionszeit, die in der Regel 2 bis 8 h, insbesondere 3 bis 6 h, beträgt, steigt der Reaktorinnendruck im Allgemeinen auf 3 bis 10 bar, insbesondere 4 bis 8 bar an. Sobald der Reaktorinnendruck im Wesentlichen konstant ist, wird der Reaktionsreaktor langsam auf Atmosphärendruck entspannt und das im Reaktor ursprünglich enthaltene und später noch gebildete Reaktionswasser destillativ aus dem Kessel entfernt. Hierbei wird zweckmäßigerweise schrittweise ein Unterdruck von 800 mbar, 500 mbar bis 50 mbar eingestellt.

Essentiell ist es für den erfindungsgemäß angestrebten Erfolg, dass zur vollständigen bzw. weitgehenden Entfernung des Wassers aus dem Reaktionsansatz am Ende des Reaktionsprozesses ein Unterdruck angelegt wird, wie er in die vorstehend beschriebene erfindungsgemäße Lehre integriert ist. So wird der Druck im Reaktionsraum auf weniger als 250 mbar, insbesondere weniger als 150 mbar, gesenkt und dann das erfindungsgemäße flammfeste Polyamid FR gewonnen. Die Kondensationsreaktion kann u.a. dann als abgeschlossen angesehen werden, wenn das Wasser durch das Anlegen von Unterdruck weitgehend entfernt worden ist und somit letztlich ein hoher Umsatz erreicht wird, der sich im Drehmoment von 2,0 bis 12 Nm, insbesondere von 3,0 bis 8,5 Nm, darstellt. In direkter Korrelation mit dem erreichten Drehmoment geht ein gewünschter Molekulargewichtsaufbau einher. Vorteilhaft ist es, die Schmelze zum Erstarren durch ein Eisbad zu führen und den resultierenden Polymerstrang zu granulieren. Es ist des Weiteren nützlich, das erhaltene Granulat in Wasser bei 80°C zu extrahieren. Hierbei werden Oligomere sowie Restmonomermengen extrahiert.

Das erfindungsgemäße Verfahren zielt ab auf die Herstellung des erfindungsgemäßen flammfesten, wärmestabilisierten Polyamids FR. Bei der Beschreibung des erfindungsgemäßen Polyamids wurde erkennbar gemacht, welche Lactame sich im Einzelnen hier heranziehen lassen, d.h., wie in der erfindungsgemäßen Verfahrensfolge definiert, insbesondere solche mit 4 bis 20 Ringatomen. Es soll hier auf die vorstehende Aufzählung der erfindungsgemäß in Betracht kommenden Lactame verwiesen werden, um umfangreiche Wiederholungen zu vermeiden.

Das erfindungsgemäße Verfahren lässt sich, wie ohne Weiteres dem Fachmann erkennbar, in vielfältiger Weise vorteilhaft ausgestalten. Hierzu im Einzelnen:
Das erfindungsgemäße Verfahren wird dadurch vorteilhaft weitergebildet, wenn der Druck bei der abschließenden Entfernung des Wassers auf 1 bis 100 mbar, insbesondere auf 1 bis 50 mbar, gesenkt wird. Von besonderem Vorteil ist es im Hinblick auf die Eigenschaften des angestrebten flammfesten Polyamids, wenn der Druck auf 1 bis 10 mbar gesenkt wird. Gleichermaßen vorteilhaft ist es, wenn die Menge von Wasser auf 2 bis 15 Gew.-%, vorzugsweise auf 4 bis 15 Gew.-%, insbesondere auf 2 oder 4 bis 8 Gew.-%, auch vorzugsweise auf 8 bis 15 Gew.-%, eingestellt wird, bezogen auf die Gesamtmenge der Reaktionspartner der Polykondensation.

Das Erfindungsziel wird dann besonders vorteilhaft erreicht, wenn die phosphorhaltigen Säuren V und VI in dem Reaktionssystem in einer solchen Menge eingesetzt werden, dass der Phosphorgehalt des erhaltenen flammfesten Polyamids FR mindestens 0,01 und/oder höchstens 10 Gew.-%, insbesondere mindestens 0,01 und/oder höchstens 8 Gew.-%, beträgt. Hierbei gilt es als besonders vorteilhaft, wenn der Phosphorgehalt des flammfesten Polyamids FR auf 0,01 bis 4 Gew.-% eingestellt wird.

Wie vorstehend bereits erkennbar gemacht, bestehen vielfältige Möglichkeiten, das erfindungsgemäße flammfeste Polyamid FR durch Einbezug von Additiven und/oder nicht erfindungsgemäßen Polyamiden, gegebenenfalls auch anderen Polymeren, wie zum Beispiel Polyamid 6, Polyamid 6.6 als auch Polyestern (PET, PBT, PTT), zu modifizieren. Hierbei hat es sich als besonders vorteilhaft erwiesen, dass der Phosphorgehalt des flammfesten Polyamids FR auf 0,01 bis 4 Gew.-% eingestellt wird.

Eine besondere Ausgestaltung des erfindungsgemäßen Verfahrens besteht darin, dass hiermit die Herstellung von Polyamiden mit den vorstehend bezeichneten Struktureinheiten (IIIa3), (IIIb3) und (IIIb4) möglich ist. Bei der Durchführung des oben detailliert beschriebenen erfindungsgemäßen Verfahrens wird demzufolge ein substituiertes bzw. unsubstituiertes Aminopiperidin der aus den Struktureinheiten erkenntlichen Art herangezogen. Die Zugabe von Licht- und Wärmestabilisator (VII) wirkt sich in Kombination mit den phosphorhaltigen Säuren besonders positiv aus, wenn das Aminopiperidin (VII) in dem erfindungsgemäßen flammfesten Polyamid mindestens etwa 0,01 bis 15 Gew.-%, insbesondere mindestens etwa 0,01 bis 5 Gew.-% ausmacht. Vorstehend wurden für den Fall, dass Substituenten vorliegen, diese bezeichnet, worauf verwiesen sei. Bei der Durchführung des erfindungsgemäßen Verfahrens wird das strukturbildende Aminopiperidin entweder zusammen mit den anderen Ausgangsmaterialien unmittelbar herangezogen. Gegebenenfalls kann es später, wenn sich innerhalb des Reaktors ein Druck aufgebaut hat, auch unter Druck eingeführt oder am Ende der Polykondensationsphase zugegeben werden.

Grundsätzlich ist es denkbar, auch entsprechend substituierte 2- und/oder 3-Aminopiperidine im Sinne der Erfindung heranzuziehen.

Der besondere Vorteil der oben bezeichneten Strukturelemente (IIIa3), (IIIb3) und (IIIb4) liegt darin, dass die Carbonsäureendgruppen durch das Aminopiperidin (VII) geschützt werden. Der Licht- und Wärmestabilisator ist kovalent an das Polyamid gebunden. Als besonders vorteilhaft hat es sich herausgestellt, dass sich insbesondere die synergistische Wirkung die Thermostabilität der FR-Polyamide im Übermaß erhöht. Gerade die unerwartete Erhöhung der Stabilität in Kombination ermöglicht und vereinfacht die Weiterverarbeitung in verschiedenen Kunststoffverarbeitungsschritten.

Die Vorteile, die mit der Erfindung verbunden sind, beschränken sich nicht, worauf ausdrücklich verwiesen sei, auf eine besonders günstige Verfahrensführung. Die nach dem erfindungsgemäßen Verfahren erhaltenen flammfesten Polyamide FR, gegebenenfalls in Zumischung mit anderen Substanzen, erweisen sich von besonderem Nutzen, wenn sie zur Herstellung von Formkörpern Verwendung finden, insbesondere von Folien, Bauteilen und Garnen, insbesondere Monofilament- bzw. Multifilamentgarnen sowie Stapelfasergarnen, insbesondere im Rahmen eines Extrusionsverfahrens. Es ist hier besonders vorteilhaft, wenn flammfeste Polyamide als Matrix in faserverstärkten Formkörpern, insbesondere Bauteilen aus faserverstärkten Kunststoffen, herangezogen werden. Hierbei ist es besonders zweckmäßig, wenn das Extrusionsverfahren als Blasform-, Spritzguss- oder Schmelzspinnverfahren durchgeführt wird. Die erfindungsgemäß hergestellten Monofilamente bzw. Monofilamentgarne sowie die daraus gewonnenen Stapelfasern werden mit besonderem Vorteil zur Herstellung textiler Flächengebilde, insbesondere von Gestricken, Geweben, Vliesen und Gewirken, herangezogen. Zudem kann das FR-Polyamid in faserverstärkten Verbundkörpern als thermoplastische, intrinsisch flammgeschützte Matrix Anwendung finden. Eine Einstellung der benötigten Viskositäten kann durch Festphasennachkondensation oder reaktive Extrusion mit Kettenverlängerern, wie insbesondere Epoxiden oder Bisoxazolinen, erfolgen. Zum besseren Verständnis der Erfindung dienen die nachfolgenden technologischen Erläuterungen:
Einleitend wurde der Stand der Technik zur Erzeugung von Polyamiden, hier insbesondere Polyamid 6, bei Einsatz eines Kettenreglers beschrieben, mit dem die durchschnittliche Kettenlänge in Korrelation zum Molekulargewicht beeinflusst wird. Üblich ist bei Polyamiden hierzu die Verwendung von Monocarbonsäuren, wie Essigsäure, Propionsäure und/oder Benzoesäure oder Biscarbonsäuren, wie Terephthalsäure, Isophthalsäure, Adipinsäure und/oder Sebacinsäure. Diese Verbindungen, welche in der Synthese durch Bildung einer Amidbindung zu einer "Maskierung" reaktiver NH₂-Gruppen führen, regelt die Aminoendgruppenzahl, so dass weitere Wachstumsstufen gesteuert werden können. Da diese Maskierung im Reaktionsraum rein statistisch abläuft, wird im Mittel die durchschnittliche Kettenlänge begrenzt, und es resultiert hierzu eine engere Molekulargewichtsverteilung. Die Auswahl und Kombination von kettenregelnden Verbindungen orientiert sich an den Produkteigenschaften bezüglich der Amino- und Carboxylendgruppenzahl sowie der gewünschten Viskosität des Polyamids. Zusätze von Dicarbonsäuren oder Diaminen führen bei Polyamid 6 zu erhöhten Festigkeiten der daraus resultierenden Formkörper. Hier hat es sich zusätzlich als besonders nützlich erwiesen, phosphorhaltige Verbindungen der Strukturen (V) und (VI) in Kombination mit üblichen Wärme- und Lichtstabilisatoren zu verwenden. Es hat sich gezeigt, dass sich durch diese Kombination die Wärme- und Lichtbeständigkeit der FR-Polyamide bei den erhaltenen Flammschutzeigenschaften deutlich steigern ließ. Dies ist besonders bei der Herstellung von Multifilamenten von großer Bedeutung, da hier das Polymer für längere Zeiten hohen Temperaturen ausgesetzt ist. Die Zugabe von größeren Mengen an additiven Flammschutzmitteln führt zum schnellen Abbau der Viskositäten. Gerade die Kombination von Verbindungen (V) und (VI) mit Licht- und Wärmestabilisatoren der Struktur (VII) führt im Vergleich zu den alleinigen Komponenten zu einer erhöhten Temperaturstabilität, die sich in Verarbeitungsprozessen spürbar auswirkt. Positiv ist anzumerken, dass alle verwendeten Komponenten, wie dargestellt, in der Polymerkette kovalent gebunden sind. Ein Auswaschen oder eine Migration an die Oberfläche der Produkte ist dadurch unterbunden.

Die vorliegende Erfindung schlägt vor, die Kettenregler des Stands der Technik durch Verbindungen zu ersetzen, welche über den kettenregelnden Effekt hinaus als Flammschutzmittel wirken. Diese Verbindungen sind entweder spezielle Dicarbonsäuren mit Phosphor-Struktureinheiten in der Seitenkette oder spezielle Organophosphinsäuren. Die Verbindungen, die erfindungsgemäß zur Erzeugung von z.B. flammgeschütztem Polyamid 6 insbesondere zum Einsatz gekommen sind, sind nachfolgend abgebildet.

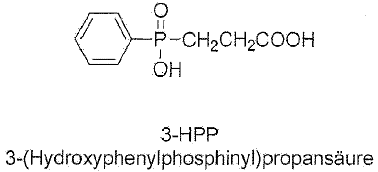

Ersichtlich hat die Erfindung, wie vorstehende Beschreibung zeigt, einen besonders wertvollen technischen Vorschlag unterbreitet, wie die angesprochene Aufgabe, von der die Erfindung ausgeht, gelöst wird. Gefunden wurde demzufolge ein Weg, um Polyamide, hier insbesondere Polyamid 6, bereits während der Synthese intrinsisch mit Flammschutz auszustatten.

Dies geschieht über den Zusatz phosphorhaltiger Verbindungen (halogenfrei!), welche zugleich als Kettenregler wirken. Sowohl die kettenlängenregelnde Wirkung als auch der Flammschutzeffekt werden aufgezeigt. Als besonders vorteilhaft erweist sich, dass aus prozesstechnischer Sicht keine Anpassung erfolgen muss. Es wird lediglich eine Komponente, welche eine bestimmte Funktion übernimmt (z.B. Kettenregler), durch eine andere Komponente, welche dann zwei wichtige Funktionen übernimmt (hier: 3-HPP als Kettenregler und Flammschutzadditiv) ersetzt. Das resultierende Polyamid unterscheidet sich in den Eigenschaften, insbesondere in der Weiterverarbeitbarkeit zu Fasern nach dem Schmelzspinnverfahren, kaum.

Ein weiterer positiver synergistischer Effekt tritt auf, wenn den behandelten FR-Polyamiden Licht- und Wärmestabilisatoren zugesetzt werden. Es konnte festgestellt werden, dass eine stabilisierende Wirkung besonders in der Kombination der phosphorhaltigen Copolyamide (insbesondere HPP (VI)) und eines Thermostabilisators auftritt, verglichen mit der Wirkung des reinen Thermostabilisators. Das Molekulargewicht kann darüber hinaus durch Zugabe von Kettenverlängerer bei der Schmelzextrusion (= Reaktivextrusion) in einfacher Weise angehoben werden. Zudem besteht die Möglichkeit, Kettenverlängerer auch in der Synthese von Beginn an zuzugeben und somit einerseits den Phosphorgehalt als auch das Molekulargewicht zu erhöhen. Hier werden bevorzugt Bisoxazoline und Bisoxazine verwendet, insbesondere 1,3-Phenylenbisoxazolin (DE 102007009921 A1, DE 2458733 B1). Damit ist basierend auf vorliegender Erfindung auch die Entwicklung eines FR-PA6-Masterbatches mit einem deutlich höheren Phosphorgehalt denkbar, das jedoch aufgrund der die Kettenlänge regelnden Eigenschaft zunächst zu einem niedrigeren durchschnittlichen Molekulargewicht führt. Durch den Austausch des Standard-Kettenreglers ist ein höherwertiges Produkt zugänglich, das bereits den Flammschutz intrinsisch beinhaltet. Zugleich können Prozessschritte in der Veredlung (Ausrüsten mit Flammschutz) eingespart werden.

Die Erfindung soll nachfolgend anhand verschiedener Beispiele noch näher erläutert werden.

Beispiel 1 (Allgemeines Verfahren zur Synthese von Polyamid nach ringöffnender hydrolytischer Polymerisation).

Für die Synthese von Polyamid 6 nach der ringöffnenden hydrolytischen Polymerisation im Technikumsmaßstab steht eine handelsübliche 5L-Polykondensationsanlage zur Verfügung. Die Anlage verfügt über einen konischen Rührkessel (Hersteller Fa. Juchheim). Der Reaktor ist bis zu einer maximalen Druckbelastung von 15 bar ausgelegt und kann auf bis zu 350°C geheizt werden. Zudem ist die Anlage mit einer auf bis zu 220°C beheizbaren Kolonne sowie einem nachgeschalteten Kühler mit Auffanggefäß für Kondensate ausgestattet. Über eine Hochvakuumpumpe kann ein Vakuum von bis zu 4•10⁻² mbar erreicht werden, durch den Stickstoffzulauf lässt sich der Innendruck auf bis zu 6 bar voreinstellen. Die Drehgeschwindigkeit des Rührwerks ist bis zu 700 U/min mess- und regelbar. Hierzu verfügt das Rührwerk über eine Vorrichtung für die Messung und Aufnahme des Drehmoments. Der Auslass des Reaktors lässt sich mit einer auf bis zu 350°C beheizbarer Ventilheizmanschette temperieren.

Nach diesem Standardverfahren werden auf der beschriebenen Anlage zunächst unter Stickstoffstrom und bei Atmosphärendruck bis zu 1500 g (13,26 mol) ε-Caprolactam binnen einer halben Stunde bei 80 - 100°C Reaktorinnentemperatur aufgeschmolzen. Dann erfolgt, ebenfalls unter Stickstoffstrom, der Zusatz von jeweils 50,0 g (2,5 mol) bidestilliertem Wasser sowie von jeweils 4,20 g (0,03 mol) Phthalsäure als Kettenregler. An dieser Stelle werden optional Polymeradditive, z.B. UV- und Thermostabilisatoren, Antioxidantien, Mattierungsmittel oder Füllstoffe, in üblichen Mengen von 10 - 5000 ppm bezüglich der eingesetzten Menge ε-Caprolactam zudosiert.

Der Reaktor wird unter Atmosphärendruck verschlossen und eine Solltemperatur von 260°C eingestellt. Der Reaktorinnendruck wird mit Stickstoff auf rund 4-5 bar eingestellt. Während der Reaktionszeit von durchschnittlich 4 h steigt der Reaktorinnendruck auf etwa 5 bis 10, insbesondere 6 bis 8 bar an. Im Anschluss wird der Reaktor langsam auf Atmosphärendruck entspannt und das Reaktionswasser wird destillativ aus dem Kessel entfernt. Zur vollständigen Entfernung des Wassers aus dem Reaktionsansatz wird langsam ein Unterdruck < 10 mbar angelegt, wobei das Ansteigen des Drehmoments den Molekulargewichtsaufbau anzeigt. Sobald das Drehmoment in Korrelation mit dem gewünschten Molekulargewicht das entsprechende Niveau erreicht hat, kann die Polykondensation beendet werden. Die Schmelze wird zum Erstarren durch ein Eisbad geführt und der resultierende Polymerstrang wird granuliert. Abschließend wird das Granulat im Wasserbad bei 80°C extrahiert.

### Beispiel 2 (Syntheseansätze und Ergebnisse der Herstellung von Polyamid 6)

Anhand der im vorstehenden Beispiel 1 beschriebenen Verfahrensweise wird ein Polyamid aus ε-Caprolactam auf der bezeichneten 5L-Polykondensationsanlage hergestellt, wobei die jeweiligen Ansatzgrößen mit den daraus resultierenden Ergebnissen in der nachstehenden Tabelle 1 zusammengefasst sind. Dabei ist das Beispiel 1a ein Vergleichsbeispiel, bei dem lediglich ein Kettenregler in Form von Terephthalsäure (TPA) eingesetzt wird, während sich die Beispiele 1b, 1c, 1d und 1e auf die vorliegende Erfindung beziehen, bei der während der Herstellung der reaktive Einbezug einer phosphorhaltigen Säure erfolgt.

**Tabelle 1**

| Beispiel Nr. | 1a (Vergleich) | 1b (Erfindung) | 1c (Erfindung) | 1d (Erfindung) |
|---|---|---|---|---|
| Monomer | ε-Caprolactam | ε-Caprolactam | ε-Caprolactam | ε-Caprolactam |
| Menge (in g) | 1500 | 1500 | 1500 | 1500 |
| Menge (in mol) | 13,3 | 13,3 | 13,3 | 13,3 |
| Regler/Flammschutz-Comonomer | TPA (nur Kettenrealer) | HPP | HPP | HPP |
| Menge (in g) | 6 | 7,73 | 15,46 | 16 |
| Molgewicht | 166,13 | 214,16 | 214,16 | 214,16 |
| Menge (in mmol) | 36 | 36 | 72 | 75 |
| Phosphor-Gehalt (berechnet) (in %) | 0 | 0,07 | 0,15 | 0,15 |
| Wasser (3 Mol-% bzgl. Caprolactam) | 45 | 45 | 45 | 45 |
| Ausbeute (Granulat) (in g) | 1089 | 1334 | 1060 | 1192 |
| Ausbeute (in %) | 73 | 89 | 71 | 79 |
| Molgewicht (g/mol, viskosimetrisch | 18887 | 19109 | 14789 | 14789 |
| Aminoendgruppen (µval/g) | 34 | 26,0 | 2 | 2,3 |
| relative Viskosität* | 2,3433 | 2,3798 | 1,9559 | 2,0818 |

| | | | | |
|---|---|---|---|---|
| Anmerkungen: * Konzentration 924,64 g/100 ml; HPP: 3-(Hydroxyphenylphosphinyl)-propansäure. | | | | |

Beispiel 1a (Vergleich) entspricht einer Referenz nach dem Stand der Technik mit Terephthalsäure (TPA) als Kettenregler. In den Beispielen 1b, 1c und 1d wird 3-(Hydroxyphenylphosphinyl)-propansäure als Kettenregler mit Vermittlung der Flammschutzeigenschaften eingesetzt.

Die Ausbeuten der einzelnen Versuche variieren rein statistisch und liegen jeweils in der gleichen Größenordnung. Insgesamt wird vor dem Hintergrund des Referenzversuchs kein negativer Einfluss der erfindungsgemäßen Lehre auf den Syntheseprozess beobachtet.

Die Beispiele 1b und 1c entsprechen einer Versuchsreihe unter Verwendung unterschiedlicher Dosierungen 3-HPP. Dabei wird mit zunehmender Menge 3-HPP ein niedrigeres Molekulargewicht (viskosimetrisch bestimmt) erzielt. Damit ist erwartungsgemäß die kettenlängenregelnde Wirkung der diskutierten phosphorhaltigen Verbindungen bestätigt. Liegt die Menge des zugesetzten Kettenreglers (Beispiel 1b) in der gleichen Größenordnung wie im Falle des Vergleichsbeispiels 1a, dann werden ähnliche Viskositäten (Molekulargewichte) erzielt.

Beispiele 1e und 1f entsprechen einer Versuchsreihe, in der in analoger Weise phosphorhaltige Polyamide (wie 1b-1d) unter zusätzlicher Zugabe von Lichtstabilisator Triacetondiamin (4-Amino-2,2,6,-tetramethylpiperidin) hergestellt wurden. Es konnte gezeigt werden, dass die Licht- und Wärmestabilisatoren der allgemeinen Struktur (VII) keinen negativen Effekt auf den Verlauf der Reaktion oder die erreichte Viskosität haben. Es wurden relative Viskositäten in der gleichen Größe erhalten. Die erhöhte Thermostabilität konnte durch rheologische Messungen vergleichend zu den FR-Polyamiden (1b-1e) gezeigt werden. Die Thermostabilität der Polyamide 1g und 1h waren zudem gegenüber von Referenzpolyamid mit Thermostabilisator Triacetondiamin (4-Amino-2,2,6,-tetramethylpiperidin) erhöht.

Die relative Viskosität, gemessen als 1%-ige Lösung in 96%-iger Schwefelsäure bei 25°C, von mindestens 2,0 (nach DIN 51562), welche als Indikator für die Weiterverarbeitbarkeit der erzeugten Granulate zu Fasern im Schmelzspinnprozess herangezogen werden kann, wird unter Berücksichtigung der Rundungsstellen in allen Fällen erreicht.

Der Phosphorgehalt (berechnet) variiert von 0,07 bis 0,15 % und liegt damit in einem speziell für die Nichtentflammbarkeit von Polyamid 6 bevorzugten Bereich.

Die Ergebnisse der Versuche zeigen den geringen Einfluss der phosphorhaltigen Kettenregler auf die Kennwerte der Polyamide. Es können somit unterschiedliche Konzentrationen der Flammschutzmittel kovalent in die Polymerkette einkondensiert werden, ohne dass eine Änderung verarbeitungsrelevanter Kenngrößen auftritt. Auch die Zugabe von Thermostabilisatoren hat keinen negativen Einfluss auf Größen wie Molekulargewicht, Viskosität oder Schmelzpunkt.

### Beispiel 3 (Erzeugung von Filamentgarn und Gestricken/Flammtest)

Die Erzeugung von Garnen erfolgt im Schmelzspinnprozess. Dabei werden zunächst POY-Garne erzeugt und anschließend verstreckt. Da jeweils nur etwa 1 kg Material zur Verfügung steht, werden die Versuche mit einem Haake-Extruder (Rheomex 252, vertrieben von der Fa. Thermo Fisher Scientific Inc.) durchgeführt. Dieser besitzt eine ¾" (1,45 cm) Schnecke mit einem Längen/Durchmesser (L/D)-Verhältnis von 25. Der Extruder wird mit konstanter Schneckendrehzahl gefahren und die Schmelztemperatur an der Düse bei allen Versuchen konstant gehalten. Zur Aufwicklung der Garne dient der Schnellwickler (Barmag SW46/vertrieben von der Fa. Oerlikon Barmag), der zur Reduzierung der Fadenspannung mit zwei kalten vorgeschalteten Galetten betrieben wird. Unmittelbar vor der ersten Galette wird mit einem Spinfinish präpariert. Die anschließende Nachverstreckung erfolgt an einer handelsüblichen Verstreckeinheit (vertrieben von der Fa. Zinser).

Die Kraft/Dehnung/Modul-Messungen erfolgen an dem handelsüblichen Gerät Statimat M (von der Fa. Textechno). Unter Einsatz der beschriebenen Produktionsanlage wurde mit den für das Standard-PA6 lange erprobten Einstellungen der Verarbeitungsparameter das Beispiel 1a vorgefahren, bevor bei unveränderten Einstellungen die FRmodifizierten Polyamide verarbeitet werden. Die verwendeten Prozessparameter bzw. die daraus resultierenden variablen Größen sind in der folgenden Tabelle 2 zusammengefasst.

**Tabelle 2**

| (Spinnparameter und Festigkeiten der verstreckten PA6-Garne gemäß der Erfindung und gemäß Vergleichsbeispiel) | | | | |
|---|---|---|---|---|
| Beispiel Nr. | 1a (Vergleich) | 1b (Erfindung) | 1c (Erfindung) | 1d (Erfindung) |
| Temperaturen | | | | |
| Schmelze [°C] | 268 | 264 | 267 | 266 |
| Düse | | | | |
| Lochzahl | 24 | 24 | 24 | 24 |
| Durchmesser [µm] | 300 | 300 | 300 | 300 |

| Abzug | | | | |
|---|---|---|---|---|
| Wickler [m/min] | 4000 | 4000 | 4000 | 4000 |
| | | | | |

| KD unverstreckt | | | | |
|---|---|---|---|---|
| Titer | 47 | 46,1 | 44,8 | 45,3 |
| Dehnung [%] | 67,02 | 63,73 | 65,32 | 65,81 |
| Festigkeit [cN/Tex] | 43,23 | 37,44 | 37,89 | 38,74 |
| Modul E 0-1% | 185,49 | 202,38 | 135 | 181,21 |
| | | | | |

| KD verstreckt | | | | |
|---|---|---|---|---|
| Titer | 33,6 | 36,2 | 34,5 | 35,1 |
| Dehnung [%] | 23,44 | 25,47 | 30,71 | 28,2 |
| Festigkeit [cN/Tex] | 56,74 | 47,12 | 49,09 | 51,22 |
| Modul E 0-1% | 196,92 | 176,01 | 155,18 | 163,22 |

Anmerkung: KD bedeutet: Kraft-Dehnungs-Messung.

### Beispiel 4 (Nachweis des Flammschutzeffektes)

Zur Untersuchung der Nichtentflammbarkeit werden die verstreckten Garne auf einer Rundstrickmaschine zu Flächen verarbeitet. Diese werden in einen Rahmen gespannt und einem horizontalen Brenntest unterzogen.

Untersucht werden Gestricke aus den Garnen von Vergleichsbeispiel 1a sowie Beispiel 1b.

Vergleichsbeispiel 1a: Nach kurzer Anzündphase brennt das Material langsam und eigenständig weiter. Zu beobachten ist ein brennendes Abtropfen von Polymerschmelze. In Kontakt mit dem kalten Metallrahmen erlischt die Flamme. Nach erneutem Anzünden brennt das Material dann wieder langsam und stetig eigenständig weiter.

Erfindungsgemäße Phosphor-modifizierte Polyamid-Proben: Die Proben nach den Beispielen 1b, 1c und 1d schmelzen beim Anzündversuch auf und kräuseln sich zusammen. Sobald die Anzündflamme entfernt wird, erlischt die Flamme und ein eigenständiges Weiterbrennen ist nicht zu beobachten. Ein brennendes Abtropfen ist ebenfalls nicht zu beobachten. Diese erfindungsgemäßen Proben zeigen eine Nichtentflammbarkeit, die in den Vorgaben der Vorschrift UL 94 V-0 entspricht.

Die durchgeführten Entflammbarkeitstests sind nicht genormt.

Anmerkungen: Die vorstehenden "und/oder"-Formulierungen bei Aufzählungen besagen, dass darin bezeichnete Verbindungen bzw. Größen allein oder in Kombination mit ein oder mehreren anderen aufgelisteten Verbindungen bzw. Größen erfindungsgemäß in Betracht kommen. Hierfür könnte auch die Formulierung "ausgewählt aus der Gruppe, bestehend aus" gesetzt werden.

## Patentansprüche

1. Flammfestes Polyamid als Reaktionsprodukt eines Lactams, insbesondere von ε-Caprolactam und/oder Laurinlactam, und gegebenenfalls mit einem Gehalt an weiteren Komponenten, **dadurch gekennzeichnet, dass** es ein flammfestes Polyamid FR enthält, das in seiner Hauptkette neben den Polyamid-Struktureinheiten der Formel (I)
-NR¹-(CHR"₁)n-CO- (I),
worin die Polyamid-Struktureinheiten auch auf zwei oder mehrere unterschiedliche Lactame zurückgehen können und worin bedeuten
n eine ganze Zahl, insbesondere eine ganze Zahl von 2 bis 19, insbesondere von 3 bis 12, besonders bevorzugt von 5 bis 10,
R"₁ Wasserstoff, einen organischen linearen oder verzweigten C₁-C₁₀-Rest, vorzugsweise einen C₁-C₁₀-Alkylrest, insbesondere einen Methyl-, Ethyl-, i-Propyl-, n-Butyl-, i-Butyl-, tert.-Butyl-, einen Phenyl-, Acetyl- und/oder Silylrest, insbesondere Trimethylsilyl-, Tributylsilyl- oder Triphenylsilylrest,
die folgenden phosphormodifizierten Struktureinheiten aufweist:
phosphormodifizierte Struktureinheiten der Formeln (IIIa1) und (IIIa2) 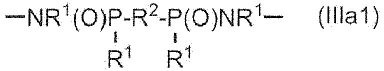 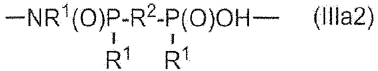 und/oder
phosphormodifizierte Struktureinheiten der Formeln (IIIb1) und (IIIb2) 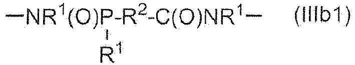 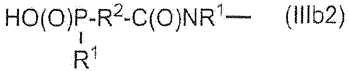 und optional
phosphormodifizierte Struktureinheiten der Formeln (IIIa3), (IIIb3) und/oder (IIIb4) 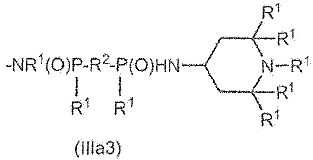 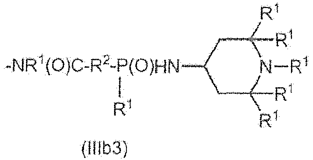 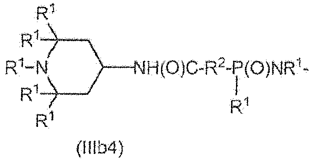
wobei in der Formel (IIIa1) und in den folgenden Formeln sowie in Formel (I) bedeuten:
R¹, unabhängig voneinander, Wasserstoff, eine lineare, cyclische oder verzweigte C₁-C₆-Alkylgruppe, insbesondere eine C₁-C₃-Alkylgruppe, eine Arylgruppe, insbesondere mit bis zu drei kondensierten oder nicht kondensierten Ringen, insbesondere in Form einer Phenyl-, Benzyl-, Naphthyl-, Phenantryl-, Mesityl- und/oder Tolylgruppe, eine Alkylarylgruppe, insbesondere eine Triphenylmethylgruppe, und/oder eine Arylalkylgruppe, insbesondere eine i-Propylphenyl, tert.-Butyl-phenyl- und/oder Nonylphenylgruppe und/oder eine Alkyl- und/oder Arylsilylgruppe, insbesondere eine Trimethylsilyl-, Tributylsilyl- und/oder Triphenylsilylgruppe (Definition (II)),
R² einen zweiwertigen organischen Rest, insbesondere in Form eines linearen, cyclischen oder verzweigten C₁-C₁₀-Alkylen-, insbesondere C₁-C₄-Alkylen-Restes, eines C₁-C₁₀-Alkenylen-, insbesondere eines C₁-C₆-Alkenylen-Restes und/oder eines C₆-C₁₀-Arylen-, insbesondere eines 1,4-Phenylen-Restes,
wobei die einzelnen Reste in den jeweiligen Phosphinsäureamid-Struktureinheiten innerhalb der Hauptkette unterschiedlich sein können,
und das flammfeste Polyamid FR eine relative Viskosität, gemessen nach DIN 51562 als 1%-ige Lösung in 96%-iger Schwefelsäure bei 25°C, von mindestens 1,7, insbesondere mindestens 1,9 aufweist.

2. Flammfestes Polyamid nach Anspruch 1, **dadurch gekennzeichnet, dass** das flammfeste Polyamid FR eine relative Viskosität von mindestens 2,0 und/oder höchstens 4, insbesondere höchstens 3, aufweist.

3. Flammfestes Polyamid nach Anspruch 1 oder 2, **dadurch gekennzeichnet, dass** in den Formeln (IIIa1)/(IIIa2) und (IIIb1)/(IIIb2) R¹ eine C₁-C₃-Alkylgruppe, insbesondere eine Methyl-, Ethyl- und/oder 2-Propylgruppe darstellt.

4. Flammfestes Polyamid nach mindestens einem der vorhergehenden Ansprüche, **dadurch gekennzeichnet, dass** das flammfeste Polyamid FR mindestens 0,01 Gew.-% und/oder höchstens 10 Gew.-%, insbesondere mindestens 0,01 und/oder höchstens 8 Gew.-% Phosphor enthält.

5. Flammfestes Polyamid nach mindestens einem der vorhergehenden Ansprüche, **dadurch gekennzeichnet, dass** das flammfeste Polyamid eigenschaftsverbessernde Additive, insbesondere UV- und/oder Thermo-Stabilisatoren und/oder Mattierungsmittel, enthält.

6. Flammfestes Polyamid nach Anspruch 5, **dadurch gekennzeichnet, dass** sich die Thermostabilität durch den Einbezug von Aminopiperidin und/oder von substituierten Aminopiperidinen erhöht.

7. Flammfestes Polyamid nach Anspruch 5 und 6, **dadurch gekennzeichnet, dass** sich die Thermostabilität durch Einbezug von 0,01 bis 1,0 Gew.-% Licht- und Wärmestabilisatoren der nachfolgend dargestellten Formel (VII) erhöht.

8. Flammfestes Polyamid nach mindestens einem der vorhergehenden Ansprüche, **dadurch gekennzeichnet, dass** es eine Nichtentflammbarkeit aufweist, die den Vorgaben der Vorschrift UL 94 V-0 entspricht.

9. Flammfestes Polyamid nach mindestens einem der vorhergehenden Ansprüche, **dadurch gekennzeichnet, dass** das flammfeste Polyamid eine relative Viskosität, gemessen nach DIN 51562, von mindestens 2,2, insbesondere mindestens 2,4, und/oder höchstens 4, insbesondere höchstens 3 erreicht, insbesondere zur Weiterverarbeitung nach dem Schmelzspinnverfahren.

10. Flammfestes Polyamid nach mindestens einem der vorhergehenden Ansprüche, **dadurch gekennzeichnet, dass** das flammfeste Polyamid FR als Gemisch mit nicht erfindungsgemäßen Polyamiden, insbesondere mit Polyamid 6, Polyamid PA6.9 (Hexamethylendiamin/Acelainsäure), PA6.12 (Hexylmethylendiamin/Dodecansäure), PA4.6 (Tetramethylendiamin/Adipinsäure), PA12.12 (Dodecandiamin/Dodecandisäure) oder PA6.6 (Hexamethylendiamin/Adipinsäure) sowie PA6 (Polycaprolactam), vorliegt, wobei der Anteil des flammfesten Polyamids FR, bezogen auf das Gemisch, mindestens 0,01 und/oder höchstens 20 Gew.-%, insbesondere mindestens 0,01 und/oder höchstens 10 Gew.-% und/oder höchstens 8 Gew.-% beträgt.

11. Flammfestes Polyamid nach Anspruch 10, **dadurch gekennzeichnet, dass** das Gemisch des flammfesten Polyamids FR mit nicht erfindungsgemäßen Polyamiden 0,05 bis 6 Gew.-%, insbesondere 0,1 bis 1,5 Gew.-% Phosphor enthält.

12. Flammfestes Polyamid nach Anspruch 10 oder 11, **dadurch gekennzeichnet, dass** das Gemisch aus flammfestem Polyamid FR und nicht erfindungsgemäßem Polyamid eine relative Viskosität von mindestens 1,5, insbesondere von mindestens 1,7 und/oder höchstens 4, insbesondere höchstens 3, erreicht (gemessen nach DIN 51562), insbesondere zur Weiterverarbeitung nach dem Schmelzspinnverfahren.

13. Verfahren zur Herstellung des flammfesten Polyamids nach mindestens einem der Ansprüche 1 bis 12, **dadurch gekennzeichnet, dass** im Verlaufe einer Polyamidsynthese ein substituiertes oder unsubstituiertes Lactam mit 4 bis 20 Ringatomen, insbesondere ε-Caprolactam und/oder Laurinlactam, wobei in den substituierten Lactamen die jeweiligen Substituenten denjenigen nach Formel (I) vorstehender Ansprüche entsprechen, mit einer oder mehreren Phosphor-haltigen Di(carbon)säuren der Formeln (V) und/oder (VI)
in Form der Diphosphinsäure der Formel (V), 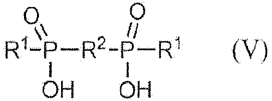 und in Form der Carbon-Phosphinsäure der Formel (VI), 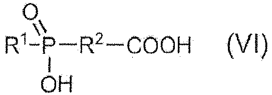 und optional in Gegenwart von Aminopiperidin und/oder substituierten Aminopiperidinen der Formel (VII) 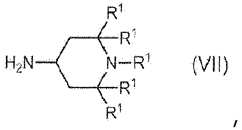 wobei in den obigen Formeln (V) (VI) und (VII) die Reste R¹ und R² die in den vorstehenden Ansprüchen dargestellte Bedeutung haben,
unter einem Druck von mindestens 3, insbesondere mindestens 10 bar, insbesondere von 4 bis 8 bar, und bei erhöhter Temperatur, insbesondere von 230 bis 280°C, in Gegenwart von Wasser, insbesondere in einer Menge von höchstens 25 Gew.-% und/oder mindestens 2 Gew.-%, insbesondere mindestens 10 Gew.-%, bezogen auf die Reaktionsmischung, um den vorbezeichneten Druckrahmen im Reaktionsreaktor aufzubauen, polykondensiert werden,
wobei aus dem im Reaktionsreaktor als Schmelze vorliegenden Polykondensationsprodukt Wasser entfernt wird, indem zum Abschluss dieser Maßnahme der Druck im Reaktionsreaktor auf weniger als 250 mbar, insbesondere weniger als 150 mbar, gesenkt und dann das flammfeste Polyamid FR gewonnen wird.

14. Verfahren nach Anspruch 13, **dadurch gekennzeichnet, dass** der Druck auf 1 bis 100 mbar, insbesondere auf 1 bis 50 mbar, und vorzugsweise auf 1 bis 10 mbar gesenkt wird.

15. Verfahren nach einem der Ansprüche 13 oder 14, **dadurch gekennzeichnet, dass** 2 bis 15 Gew.-% Wasser, insbesondere 2 bis 8 Gew.-% Wasser, bezogen auf die Gesamtmenge der Reaktionspartner der Polykondensation, eingesetzt werden.

16. Verfahren nach mindestens einem der Ansprüche 13 bis 15, **dadurch gekennzeichnet, dass** die phosphorhaltigen Säuren V und VI in dem Reaktionssystem in einer solchen Menge eingesetzt werden, dass der Phosphorgehalt des erhaltenen flammfesten Polyamids FR mindestens 0,01 und/oder höchstens 10 Gew.-%, insbesondere mindestens 0,01 und/oder höchstens 8 Gew.-%, beträgt.

17. Verwendung des flammfesten Polyamids nach mindestens einem der Ansprüche 1 bis 12 zur Herstellung von Formkörpern, insbesondere von Folien, Bauteilen und Garnen, insbesondere Monofilament- bzw. Multifilamentgarnen sowie Stapelfasergarnen, insbesondere im Rahmen eines Extrusionsverfahrens.

18. Verwendung des flammfesten Polyamids nach Anspruch 17, wonach das Extrusionsverfahren als Blasform-, Spritzguss- oder Schmelzspinnverfahren durchgeführt wird.

19. Verwendung nach Anspruch 17 oder 18, **dadurch gekennzeichnet, dass** die hergestellten Monofilamente bzw. Monofilamentgarne sowie daraus gewonnene Stapelfasergarne zur Herstellung textiler Flächengebilde, insbesondere von Gestricken, Geweben, Vliesen und Gewirken, herangezogen werden.

20. Verwendung nach Anspruch 17, **dadurch gekennzeichnet, dass** flammfeste Polyamide als Matrix in faserverstärkten Formkörpern, insbesondere Bauteilen aus faserverstärkten Kunststoffen, herangezogen werden.

## Claims

1. A flame-retardant polyamide as reaction product of a lactam, especially of ε-caprolactam and/or laurolactam, and optionally with a content of further components, **characterised in that** it contains a flame-retardant polyamide FR which has in its main chain, in addition to the polyamide structural units of formula (I)
-NR¹-(CHR"₁)n-CO- (I),
in which the polyamide structural units also can be traced back to two or more different lactams and in which n represents an integer, especially an integer from 2 to 19, especially from 3 to 12, especially preferably from 5 to 10,
R"₁ represents hydrogen, an organic linear or branched C₁-C₁₀ group, preferably a C₁-C₁₀ alkyl group, especially a methyl, ethyl, i-propyl, n-butyl, i-butyl or tert.butyl group, or a phenyl, acetyl group and/or silyl group, especially trimethylsilyl, tributylsilyl or triphenylsilyl group,
the following phosphorus-modified structural units:
phosphorus-modified structural units of formulae (IIIa1) and (IIIa2) 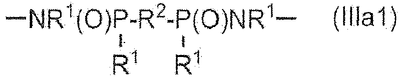 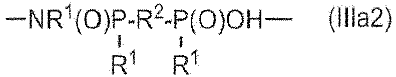 and/or
phosphorus-modified structural units of formulae (IIIb1) and (IIIb2) 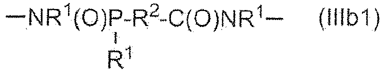 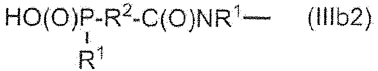 and optionally
phosphorus-modified structural units of formulae (IIIa3), (IIIb3) and/or (IIIb4) 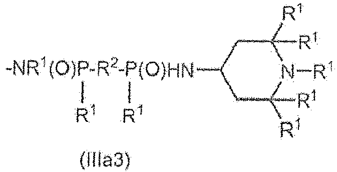 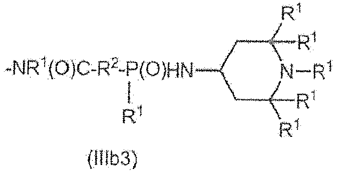 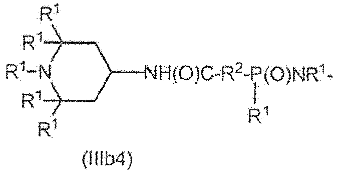
where in formula (IIIa1) and in the following formulae and also in formula (I):
R¹, independently of one another, represents hydrogen, a linear, cyclic or branched C₁-C₆ alkyl group, especially a C₁-C₃ alkyl group, an aryl group, especially with up to three condensed or uncondensed rings, especially in the form of a phenyl, benzyl, naphthyl, phenantryl, mesityl and/or tolyl group, an alkylaryl group, especially a triphenylmethyl group, and/or an arylalkyl group, especially an i-propylphenyl, tert.butyl-phenyl and/or nonylphenyl group, and/or an alkyl and/or arylsilyl group, especially a trimethylsilyl, tributylsilyl and/or triphenylsilyl group (definition (II)),
R² represents a divalent organic group, especially in the form of a linear, cyclic or branched C₁-C₁₀ alkylene group, especially a C₁-C₄ alkylene group, a C₁-C₁₀ alkenylene group, especially a C₁-C₆ alkenylene group, and/or a C₆-C₁₀ arylene group, especially a 1,4-phenylene group,
where the individual groups in the respective phosphinic acid amide structural units can differ in the main chain, and the flame-retardant polyamide FR has a relative viscosity, measured, according to DIN 51562, as a 1% solution in 96% sulphuric acid at 25°C, of at least 1.7, especially at least 1.9.

2. A flame-retardant polyamide according to claim 1, **characterised in that** the flame-retardant polyamide FR has a relative viscosity of at least 2.0 and/or at most 4, especially at most 3.

3. A flame-retardant polyamide according to claim 1 or claim 2, **characterised in that** in formulae (IIIa1)/(IIIa2) and (IIIb1)/(IIIb2) R¹ represents a C₁-C₃ alkyl group, especially a methyl, ethyl and/or 2-propyl group.

4. A flame-retardant polyamide according to at least one of the preceding claims, **characterised in that** the flame-retardant polyamide FR contains at least 0.01 % by weight and/or at most 10 % by weight, especially at least 0.01 and/or at most 8 % by weight of phosphorus.

5. A flame-retardant polyamide according to at least one of the preceding claims, **characterised in that** the flame-retardant polyamide contains property-enhancing additives, especially UV stabilisers and/or thermostabilisers and/or matting agents.

6. A flame-retardant polyamide according to claim 5, **characterised in that** it increases the thermostability by incorporation of aminopiperidine and/or substituted aminopiperidines.

7. A flame-retardant polyamide according to claim 5 and 6, **characterised in that** it increases the thermostability by incorporation of from 0.01 to 1.0 % by weight of light and heat stabilisers of formula (VII) presented below.

8. A flame-retardant polyamide according to at least one of the preceding claims, **characterised in that** it has a nonflammability which meets the requirements of regulation UL 94 V-0.

9. A flame-retardant polyamide according to at least one of the preceding claims, **characterised in that** the flame-retardant polyamide achieves a relative viscosity, measured according to DIN 51562, of at least 2.2, especially at least 2.4, and/or at most 4, especially at most 3, especially for further processing according to the melt spinning process.

10. A flame-retardant polyamide according to at least one of the preceding claims, **characterised in that** the flame-retardant polyamide FR is present as a mixture with polyamides not according to the invention, especially with polyamide 6, polyamide PA6.9 (hexamethylenediamine/acelaic acid), PA6.12 (hexylmethylenediamine/dodecanoic acid), PA4.6 (tetramethylene diamine/adipic acid), PA12.12 (dodecanediamine/dodecanedioic acid) or PA6.6 (hexamethylene diamine/adipic acid) and PA6 (polycaprolactam), the proportion of flame-retardant polyamide FR, based on the mixture, being at least 0.01 and/or at most 20 % by weight, especially at least 0.01 and/or at most 10 % by weight and/or at most 8 % by weight.

11. A flame-retardant polyamide according to claim 10, **characterised in that** the mixture of the flame-retardant polyamide FR with polyamides not according to the invention contains 0.05 to 6 % by weight, especially 0.1 to 1.5 % by weight of phosphorus.

12. A flame-retardant polyamide according to claim 10 or Claim 11, **characterised in that** the mixture of the flame-retardant polyamide FR and polyamide not according to the invention achieves a relative viscosity of at least 1.5, especially of at least 1.7 and/or at most 4, especially at most 3 (measured according to DIN 51562), especially for further processing according to the melt spinning process.

13. A method for producing the flame-retardant polyamide according to at least one of claims 1 to 12, **characterised in that** in the course of a polyamide synthesis, a substituted or unsubstituted lactam having 4 to 20 ring atoms, especially ε-caprolactam and/or laurolactam, whereby in the substituted lactams the respective substituents correspond to those according to formula (I) of the above claims, is polycondensed with one or more phosphorus-containing dicarboxylic acids of formulae (V) and/or (VI)
in the form of the diphosphinic acid of formula (V), 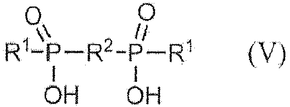 and in the form of the carbon-phosphinic acid of formula (VI), 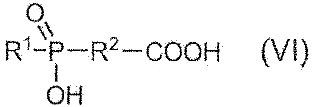 and optionally in the presence of aminopiperidine and/or substituted aminopiperidines of formula (VII) 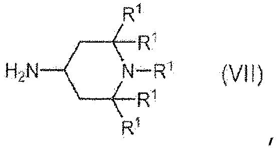 where in the above formulae (V), (VI) and (VII), the groups R¹ and R² have the meanings stated in the above claims,
under a pressure of at least 3, especially at least 10 bar, especially from 4 to 8 bar, and at an elevated temperature, especially from 230 to 280°C, in the presence of water, especially in a quantity of at most 25 % by weight and/or at least 2 % by weight, especially at least 10 % by weight, based on the reaction mixture, to build up the aforementioned pressure frame in the reaction reactor,
water being removed from the polycondensation product present as melt in the reaction reactor, **in that** to complete this measure, the pressure in the reaction reactor is reduced to less than 250 mbar, especially to less than 150 mbar, and the flame-retardant polyamide FR is then obtained.

14. A method according to claim 13, **characterised in that** the pressure is reduced to 1 to 100 mbar, especially to 1 to 50 mbar, and preferably to 1 to 10 mbar.

15. A method according to one of claims 13 or 14, **characterised in that** 2 to 8 % by weight of water, based on the total quantity of the polycondensation reaction partners, are used.

16. A method according to at least one of claims 13 to 15, **characterised in that** the phosphorus-containing acids V and VI are used in the reaction system in a quantity such that the phosphorus content of the flame-retardant polyamide FR which is obtained is at least 0.01 and/or at most 10 % by weight, especially at least 0.01 and/or at most 8 % by weight.

17. Use of the flame-retardant polyamide according to at least one of claims 1 to 12 for producing mouldings, especially films, components and yarns, especially monofilament yarns and multifilament yarns as well as staple fibre yarns, especially during the course of an extrusion process.

18. Use of the flame-retardant polyamide according to claim 17, according to which the extrusion process is carried out as a blow moulding, injection moulding or melt spinning process.

19. Use according to claim 17 or claim 18, **characterised in that** the monofilaments and monofilament yarns which are produced as well as staple fibre yarns obtained therefrom are used for the production of textile fabrics, especially knitted fabrics, woven fabrics, nonwoven fabrics and interlaced fabrics.

20. Use according to claim 17, **characterised in that** flame-retardant polyamides are used as matrix in fibre-reinforced mouldings, especially components formed from fibre-reinforced plastics.

## Revendications

1. Polyamide résistant au feu comme produit de réaction d'un lactame, en particulier de ε-caprolactame et/ou de laurolactame, et le cas échéant ayant une teneur en autres composants, **caractérisé en ce qu'**il contient un polyamide résistant au feu FR, qui comprend dans sa chaîne principale, en plus des motifs structuraux de polyamide de formule (I)
-NR¹-(CHR"₁)n-CO- (I),
dans laquelle les motifs structuraux de polyamide peuvent provenir aussi de deux ou plus de deux lactames différents et dans laquelle
n représente un nombre entier, en particulier un nombre entier de 2 à 19, en particulier de 3 à 12, de manière particulièrement préférée de 5 à 10,
R"₁ représente l'hydrogène, un radical en C₁ à C₁₀ organique linéaire ou ramifié, de préférence un radical alkyle en C₁ à C₁₀, en particulier un radical méthyle, éthyle, i-propyle, n-butyle, i-butyle, tert.-butyle, phényle, acétyle et/ou silyle, en particulier triméthylsilyle, tributylsilyle ou triphénylsilyle,
les motifs structuraux, modifiés par un groupe phosphore, suivants :
des motifs structuraux, modifiés par un groupe phosphore, de formules (IIIa1) et (IIIa2) 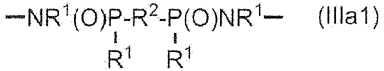 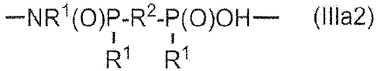 et/ou
des motifs structuraux, modifiés par un groupe phosphore, de formules (IIIb1) et (IIIb2) 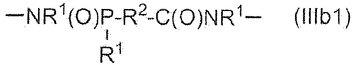 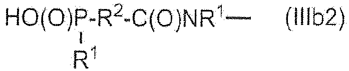 et en option
des motifs structuraux, modifiés par un groupe phosphore, de formules (IIIa3), (IIIb3) et/ou (IIIb4) 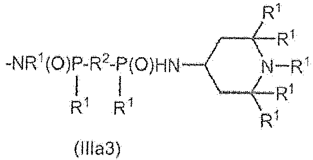 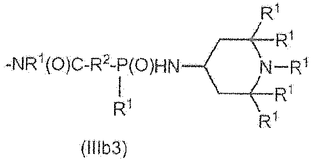 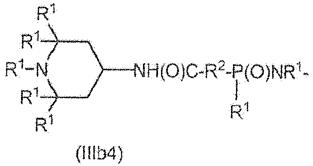
où, dans la formule (IIIa1) et dans les formules suivantes et dans la formule (I) :
R¹ représente, indépendamment les uns des autres, l'hydrogène, un groupe alkyle en C₁ à C₆ linéaire, cyclique ou ramifié, en particulier un groupe alkyle en C₁ à C₃, un groupe aryle, en particulier comprenant jusqu'à trois cycles condensés ou non condensés, en particulier sous la forme d'un groupe phényle, benzyle, naphtyle, phénanthryle, mésityle et/ou tolyle, un groupe alkylaryle, en particulier un groupe triphénylméthyle, et/ou un groupe arylalkyle, en particulier un groupe i-propylphényle, tert.-butylphényle et/ou nonylphényle et/ou un groupe alkylsilyle et/ou arylsilyle, en particulier un groupe triméthylsilyle, tributylsilyle et/ou triphénylsilyle (définition (II)),
R² représente un radical organique divalent, en particulier sous la forme d'un radical alkylène en C₁ à C₁₀, en particulier d'un radical alkylène en C₁ à C₄, linéaire, cyclique ou ramifié, d'un radical alcénylène en C₁ à C₁₀, en particulier d'un radical alcénylène en C₁ à C₆ et/ou d'un radical arylène en C₆ à C₁₀, en particulier d'un radical 1,4-phénylène,
chaque radical pouvant être différent au niveau des motifs structuraux respectifs de l'amide d'acide phosphinique à l'intérieur de la chaîne principale,
et le polyamide résistant au feu FR présente une viscosité relative, mesurée d'après la norme DIN 51562 sous forme de solution à 1 % dans de l'acide sulfurique à 96 % à 25°C, d'au moins 1,7, en particulier d'au moins 1,9.

2. Polyamide résistant au feu selon la revendication 1, le polyamide résistant au feu FR étant **caractérisé en ce qu'**il présente une viscosité relative d'au moins 2,0 et/ou d'au maximum 4, en particulier d'au maximum 3.

3. Polyamide résistant au feu selon la revendication 1 ou 2, **caractérisé en ce que**, dans les formules (IIIa1) / (IIIa2) et (IIIb1) / (IIIb2), R¹ représente un groupe alkyle en C₁ à C₃, en particulier un groupe méthyle, éthyle et/ou 2-propyle.

4. Polyamide résistant au feu selon au moins l'une des revendications précédentes, le polyamide résistant au feu FR étant **caractérisé en ce qu'**il contient au moins 0,01 % en poids et/ou au maximum 10 % en poids, en particulier au moins 0,01 et/ou au maximum 8 % en poids de phosphore.

5. Polyamide résistant au feu selon au moins l'une des revendications précédentes, le polyamide résistant au feu étant **caractérisé en ce qu'**il contient des additifs améliorant les propriétés, en particulier des stabilisateurs vis-à-vis des UV et/ou des thermo-stabilisants et/ou des agents matifiants.

6. Polyamide résistant au feu selon la revendication 5, **caractérisé en ce que** la thermostabilité augmente par incorporation d'aminopipéridine et/ou d'aminopipéridines substituées.

7. Polyamide résistant au feu selon les revendications 5 et 6, **caractérisé en ce que** la thermo-stabilité augmente par incorporation de 0,01 à 1,0 % en poids de stabilisateurs thermiques et de photostabilisants de la formule (VII) représentée dans ce qui suit.

8. Polyamide résistant au feu selon au moins l'une des revendications précédentes, **caractérisé en ce qu'**il présente une non-inflammabilité qui correspond aux dispositions de la classification UL 94 V-0.

9. Polyamide résistant au feu selon au moins l'une des revendications précédentes, le polyamide résistant au feu étant **caractérisé en ce qu'**il atteint une viscosité relative, mesurée d'après la norme DIN 51562, d'au moins 2,2, en particulier d'au moins 2,4, et/ou d'au maximum 4, en particulier d'au maximum 3, notamment pour la poursuite de la transformation d'après le procédé de filage par fusion.

10. Polyamide résistant au feu selon au moins l'une des revendications précédentes, le polyamide résistant au feu FR étant **caractérisé en ce qu'**il se présente en mélange avec des polyamides qui ne sont pas conformes à l'invention, en particulier du polyamide 6, du polyamide PA6.9 (hexaméthylènediamine/acide azélaïque), PA6.12 (hexyl-méthylènediamine/acide dodécanoïque), PA4.6 (tétraméthylène-diamine/acide adipique), PA12.12 (dodécanediamine/diacide dodécanoïque) ou PA6.6 (hexaméthylènediamine/acide adipique) et PA6 (polycaprolactame), la proportion du polyamide résistant au feu FR, par rapport au mélange, étant d'au moins 0,01 et/ou d'au maximum 20 % en poids, en particulier d'au moins 0,01 et/ou d'au maximum 10 % en poids et/ou d'au maximum 8 % en poids.

11. Polyamide résistant au feu selon la revendication 10, **caractérisé en ce que** le mélange de polyamide résistant au feu FR avec des polyamides non conformes à l'invention contient 0,05 à 6 % en poids, en particulier 0,1 à 1,5 % en poids de phosphore.

12. Polyamide résistant au feu selon la revendication 10 ou 11, **caractérisé en ce que** le mélange de polyamide résistant au feu FR et de polyamide non conforme à l'invention atteint une viscosité relative d'au moins 1,5, en particulier d'au moins 1,7 et/ou d'au maximum 4, en particulier d'au maximum 3 (mesurée d'après la norme DIN 51562), notamment pour la poursuite de la transformation d'après le procédé de filage par fusion.

13. Procédé de fabrication du polyamide résistant au feu selon au moins l'une des revendications 1 à 12, **caractérisé en ce que**, au cours de la synthèse du polyamide, un lactame substitué ou non substitué ayant 4 à 20 atomes cycliques, en particulier le ε-caprolactame et/ou le laurolactame, où, dans les lactames substitués, les substituants respectifs correspondent à ceux d'après la formule (I) des revendications précédentes, est polycondensé avec un ou plusieurs diacides (carboxyliques) contenant du phosphore de formules (V) et/ou (VI)
sous la forme d'acide diphosphonique de formule (V), 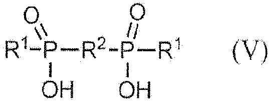 et sous la forme d'acide carboxyphosphinique de formule (VI), 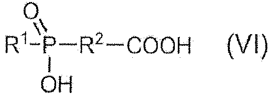 et en option, en présence d'aminopipéridine et/ou d'aminopipéridines substituées de formule (VII) 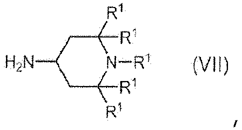 où, dans les formules ci-dessus (V), (VI) et (VII), les radicaux R¹ et R² ont la signification présentée dans les revendications précédentes,
sous une pression d'au moins 3, en particulier d'au moins 10 bar, en particulier de 4 à 8 bar, et à une température élevée, en particulier de 230 à 280°C, en présence d'eau, en particulier en une quantité d'au maximum 25 % en poids et/ou d'au moins 2 % en poids, en particulier d'au moins 10 % en poids, par rapport au mélange réactionnel pour faire monter les pressions cadres désignées précédemment dans le réacteur de réaction,
l'eau étant éliminée du produit de polycondensation présent dans le réacteur de réaction sous forme de matière fondue en abaissant la pression dans le réacteur de réaction à moins de 250 mbar, en particulier à moins de 150 mbar, pour achever cette opération, et en obtenant ensuite le polyamide résistant au feu FR.

14. Procédé selon la revendication 13, **caractérisé en ce que** la pression est abaissée à une pression de 1 à 100 mbar, en particulier de 1 à 50 mbar, et de préférence de 1 à 10 mbar.

15. Procédé selon l'une des revendications 13 ou 14, **caractérisé en ce que** 2 à 15 % en poids d'eau, en particulier 2 à 8 % en poids d'eau, sont mis en œuvre par rapport à la quantité totale des partenaires de réaction de la polycondensation.

16. Procédé selon l'une des revendications 13 à 15, **caractérisé en ce que** les acides V et VI contenant du phosphore sont mis en œuvre dans le système de réaction en une telle quantité que la teneur en phosphore du polyamide résistant au feu FR obtenu atteint au moins 0,01 et/ou au maximum 10 % en poids, en particulier au moins 0,01 et/ou au maximum 8 % en poids.

17. Utilisation du polyamide résistant au feu selon au moins l'une des revendications 1 à 12 pour la fabrication de corps moulés, en particulier de feuilles, de composants et de fils, en particulier de fils mono-filamentaires et/ou multifilamentaires ainsi que de fils de fibres empilées, en particulier dans le cadre d'un procédé d'extrusion.

18. Utilisation du polyamide résistant au feu selon la revendication 17, selon laquelle le procédé d'extrusion est réalisé sous forme de procédé de moulage par soufflage, moulage par injection ou filage par fusion.

19. Utilisation selon la revendication 17 ou 18, **caractérisée en ce que** les monofilaments et/ou fils mono-filamentaires fabriqués ainsi que les fils de fibres empilées obtenus à partir de ceux-ci sont mis en œuvre pour la fabrication de structures textiles plates, en particulier de tricots, tissus, voiles et aiguilletés.

20. Utilisation selon la revendication 17, **caractérisée en ce que** les polyamides résistant au feu sont mis en œuvre comme matrice dans des corps moulés renforcés de fibres, en particulier de composants en plastiques renforcés de fibres.
